# EUROPEAN PATENT APPLICATION

(11) **EP 2 138 814 A1**
(43) Date of publication of application: **30.12.2009**
(21) Application number: 08159257.8
(22) Date of filing: 27.06.2008
(51) Int. Cl.: G01J 1/02, G01J 1/04, G01J 1/42

(54) **Sunlight sensor for extraterrestrial use**

(71) Applicant: Nederlandse Organisatie voor toegepast-natuurwetenschappelijk onderzoek TNO, 2628 VK Delft (NL)
(72) Inventor: Leijtens, Johannes Adrianus Petrus, 2665 KH Bleiswijk (NL)
(74) Representative: Hatzmann, Martin

(57) **Abstract**

Sunlight sensor for use in a spacecraft like e.g. a satellite which in operation orbits around the earth outside the earth sphere, the sensor comprising an optoelectrical element which can be exposed to incident sunlight. The optoelectrical element is solely sensitive for a wavelength which corresponds to a wavelength area in the sunlight spectrum in which sunlight incident to the earth sphere is not substantially reflected by the earth sphere, e.g. either by applying filters between the incident sunlight and the optoelectrical element, which constituted to pass solely light within said wavelength area, or by applying a dedicated optoelectrical material which is optoelectrically sensitive within said wavelength area. Preferred wavelength lie within the areas of 200-300 nm, 1350-1450 nm or 1800-1950 nm. Optoelectrical material optoelectrically sensitive for the wavelength area of 200-300 nm is e.g. diamond, AlGaN, SiC or UV enhanced Si. For the range from about 1350-1450 nm InGaAs can be applied as optoelectrically sensitive material, to be used in combination with relevant filters.

## Description

The invention refers to a sunlight sensor for use in a spacecraft like e.g. a satellite which in operation orbits around the earth outside the earth sphere, the sensor comprising at least one optoelectrical element which can be exposed to incident sunlight.

Such sensor may be used for detecting the position of the sun relative to the spacecraft. A known sunlight sensor e.g. comprises a non-translucent layer (membrane) having an aperture (or pinhole) in it, through which the sunlight shines upon an optoelectrical sensor array, located at a precisely known distance, causing a light spot on that array. From the position of the spot on the array the angle of incidence of the light can be assessed.

The accuracy of such sunlight sensors, however, is affected by the so-called albedo effect, i.e. the sunlight which is reflected by the earth sphere to the sensors installed in the satellite which orbits around the earth (just) outside the earth sphere.

The present invention aims to provide a more accurate sunlight sensor.

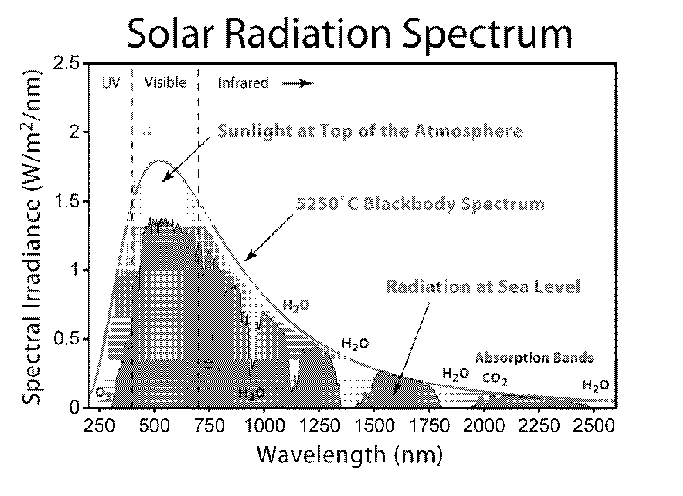

The present invention is based upon the observation (see e.g. figure 1) that, as the albedo effect, i.e. the reflection of the sunlight by the earth sphere, does not occur for some (rather small) wavelength areas (connected with the spectral/absorption lines of O₃, O₂, H₂0, CO₂etc.), the sunlight within those wavelength areas will not be reflected by the earth sphere or, in other words, no albedo effect occurs in those non-reflecting areas. The invention applies that observation and understanding by detecting the sunlight solely in one or more of those wavelength areas where the sunlight is not reflected by the earth sphere.

The present invention thus comprises a sunlight sensor for use in a spacecraft like e.g. a satellite which in operation orbits around the earth outside the earth sphere, the sensor comprising at least one optoelectrical element which can be exposed to incident sunlight. According to the invention it is preferred that said at least one optoelectrical element is or has been made solely sensitive for a wavelength which corresponds to a wavelength area in the sunlight spectrum in which sunlight incident to the earth sphere is not substantially reflected by the earth sphere.

One preferred option includes that said at least one optoelectrical element has been made solely sensitive for said wavelength area by applying one or more filters between the incident sunlight and said at least one optoelectrical element, which one or more filters are arranged and/or constituted to pass solely light within said wavelength area.

Another preferred option includes that said at least one optoelectrical element is solely sensitive for said wavelength area by applying a (more or less dedicated) optoelectrical material for said at least one optoelectrical element which is solely or at least mainly optoelectrically active or sensitive for light within said wavelength area.

In other words, either the sunlight which incides to the sensor, is filtered to pass a wavelength area which is not prone to the albedo effect, viz. due to absorption of the sunlight having that wavelength area by the earth sphere, or a sensor is used which is solely sensitive/active for such a absorbing (non-reflective and thus non albedo sensitive) wavelength area.

As can be derived from e.g. figure 1 one preferred absorbing (non-reflective, non albedo sensitive) wavelength area can be found within the area of about 200-300 nm, in the UV light area. Another preferred absorbing wavelength area can be found within the area of about 1350-1450 nm. Still another preferred absorbing wavelength area can be found within the area of about 1800-1950 nm.

Preferred optoelectrical materials which are solely or at least mainly optoelectrically active or sensitive for light within the wavelength area of 200-300 nm are diamond, AlGaN, SiC or UV enhanced Si. Filters may be required to restrict or to improve the selectivity of the optoelectrical sensor to the .wavelength area of 200-300 nm (e.g. UV enhanced Si is sensitive as such for the wavelength area of about 200-800 nm, which has to be restricted, by one or more filters, to the area 200-300 nm, as the wavelength area between 300-800 nm would cause the undesired albedo effect due to reflection of the sunlight within the 300-800 nm area).

In sunlight sensors having filters which are arranged and/or constituted to pass solely light within the wavelength area of 1350-1450 nm optoelectrical elements may be applies which comprise InGaAs as its optoelectrically active or sensitive material. The same applies for the wavelength area of 1800-1950 nm. As the optoelectrical sensitivity or activity of InGaAs is not restricted to 1350-1450 nm or 1800-1950 nm, the optoelectrical elements will need to include filters which solely pass the sunlight within the wavelength areas 1350-1450 nm or 1800-1950 nm respectively.

## Claims

1. Sunlight sensor for use in a spacecraft like e.g. a satellite which in operation orbits around the earth outside the earth sphere, the sensor comprising at least one optoelectrical element which can be exposed to incident sunlight,
**characterized in that**
said at least one optoelectrical element is or has been made solely sensitive for a wavelength which corresponds to a wavelength area in the sunlight spectrum in which sunlight incident to the earth sphere is not substantially reflected by the earth sphere.

2. Sunlight sensor according to claim 1, wherein said at least one optoelectrical element has been made solely sensitive for said wavelength area by applying one or more filters between the incident sunlight and said at least one optoelectrical element, which one or more filters are arranged and/or constituted to pass solely light within said wavelength area.

3. Sunlight sensor according to claim 1, wherein said at least one optoelectrical element is solely sensitive for said wavelength area by applying an optoelectrical material for said at least one optoelectrical element which is solely or at least mainly optoelectrically active or sensitive for light within said wavelength area.

4. Sunlight sensor according to claim 1, wherein said wavelength lies within the area of 200-300 nm.

5. Sunlight sensor according to claim 1, wherein said wavelength lies within the area of 1350-1450 nm.

6. Sunlight sensor according to claim 1, wherein said wavelength lies within the area of 1800-1950 nm.

7. Sunlight sensor according to claims 2 and 4 or 3 and 4, wherein said optoelectrical material which is solely or at least mainly optoelectrically active or sensitive for light within said wavelength area of 200-300 nm is diamond, AlGaN, SiC or UV enhanced Si.

8. Sunlight sensor according to claims 2 and 5, wherein said one or more filters are arranged and/or constituted to pass solely light within said wavelength area of 1350-1450 nm and said at least one optoelectrical element comprises InGaAs as its optoelectrically active or sensitive material.

9. Sunlight sensor according to claims 2 and 6, wherein said one or more filters are arranged and/or constituted to pass solely light within said wavelength area of 1800-1950 nm and said at least one optoelectrical element comprises InGaAs as its optoelectrically active or sensitive material.
